# EUROPÄISCHE PATENTANMELDUNG

(11) **EP 2 882 077 A1**
(43) Veröffentlichungstag der Anmeldung: **10.06.2015**
(21) Anmeldenummer: 13195701.1
(22) Anmeldetag: 04.12.2013
(51) Int. Cl.: H02K 1/16, H02K 3/34, H02K 15/12

(54) **Statorpaket mit Fliesswegbarriere**

(71) Anmelder: HILTI Aktiengesellschaft, 9494 Schaan (LI)
(72) Erfinder: Mahler, Thomas, 18299 Laage (DE)
(74) Vertreter: Hilti Aktiengesellschaft Corporate Intellectual Property

(57) **Zusammenfassung**

Statorpaket zur Verwendung in einer elektromagnetische Maschine, enthaltend wenigstens eine erste Blechlamelle und eine zweite Blechlamelle mit jeweils einem Ringelement mit einem Mittelpunkt, einer Innenseite und einer Aussenseite; sowie wenigstens ein Polelement, welches an der Innenseite des Ringelements positioniert ist und sich in radialer Ausrichtung zu dem Mittelpunkt des Ringelements erstreckt, wobei das Polelement einen Polzahn mit einem ersten Polzahnende, einem zweiten Polzahnende, einer Oberseite sowie einer ersten Unterseite und einer zweiten Unterseite aufweist. Der Polzahn enthält wenigstens ein Isolationsfließbarriereelement.

## Beschreibung

Die vorliegende Erfindung betrifft ein Statorpaket zur Verwendung in einer elektromagnetischen Maschine. Das Statorpaket enthält hierzu wenigstens eine erste Blechlamelle und eine zweite Blechlamelle mit jeweils einem Ringelement mit einem Mittelpunkt, einer Innenseite und einer Aussenseite sowie wenigstens ein Polelement, welches an der Innenseite des Ringelements positioniert ist und sich in radialer Ausrichtung zu dem Mittelpunkt des Ringelements erstreckt, wobei das Polelement einen Polzahn mit einem ersten Polzahnende, einem zweiten Polzahnende, einer Oberseite sowie einer ersten Unterseite und einer zweiten Unterseite aufweist.

Darüber hinaus betrifft die vorliegende Erfindung eine Blechlamelle zur Verwendung in dem erfindungsgemässen Statorpaket.

Statorpakete (häufig auch Blechpaket genannt) sind im Stand der Technik generell bekannt und bilden einen wesentlichen Bestandteil eines Stators (oder auch Ständer) für eine elektromagnetische Maschine. Bei der elektromechanischen Maschine kann es sich beispielsweise um einen Elektromotor, einen Generator, einen Hydromotor oder eine Pumpe handeln. Als Stator bezeichnet man in diesem Zusammenhang den feststehenden, unbeweglichen Teil einer elektromechanischen Maschine und bildet sozusagen das Gegenstück zu einem Rotor oder Läufer, dem wiederum beweglichen Teil einer elektromechanischen Maschine.

Im Inneren des Stators ist ein Rotor, der in den meisten Fällen aus einer Spule mit Eisenkern (dem sogenannten Anker) besteht, drehbar im Magnetfeld zwischen den Polschuhen des Stators gelagert ist.

Der Stator besteht für gewöhnlich aus einem zylindrischen Statorpaket, welches aus einer Vielzahl an aufeinander gelegten und miteinander verbundenen Blechlamellen gebildet ist. Nachdem die einzelnen Blechlamellen zu dem Blechpaket zusammengefügt sind, werden das Blechpaket und insbesondere die Nuten zwischen den einzelnen Polschuhelementen mit einer Kunststoffisolationsschicht ausgekleidet.

Ein derartiges Statorpaket des Stands der Technik, welcher aus einer Vielzahl von aneinander gereihten Blechlamellen besteht, ist insbesondere in der DE-Patentanmeldung 10 2009 020 481 A1 gezeigt. In dieser Druckschrift des Stands der Technik ist ein Reluktanzmotor mit einem Rotor und einem Stator offenbart. An dem Stator sind einzelne, frei stehende Statorpole ausgebildet, die von (Spulen-)Wicklungen umgeben sind. Zur elektrischen Isolierung der (Spulen-)Wicklungen gegen den Stator sind die Statorpole sowie die sich zwischen den Statorpolen in Umfangsrichtung erstreckenden Statorwandungen von einem als Kunststoffspritzteil ausgebildeten Wicklungskörper (d.h. Isolationselement) überdeckt. Dieser Wicklungskörper ist schalenartig ausgestaltet zur Auskleidung des die (Spulen-)Wicklungen flankierenden Statorbereiches.

Ein Problem bei diesen Statorpaketen des Stands der Technik besteht darin, dass die Kunststoffisolationsschicht zur Vermeidung von Kurzschlüssen nicht optimal zwischen dem Polelement und der Wickelspule auf die Innenseite des Statorpakets aufgetragen wird. Optimal bedeutet hierbei, dass diese Kunststoffisolationsschicht weder zu dick noch zu dünn aufgetragen wird, da ein zu dick aufgetragener Kunststoff eine zu hohe thermische Isolation des Statorpakets bedeutet und ein zu dünn aufgetragener Kunststoff keine ausreichende Isolationsfestigkeit aufweist.

Bedingt wird dieses Problem insbesondere dadurch, dass für gewöhnlich an den beiden Enden eines Polzahns eine relativ grosse Menge bzw. dicke Schicht an Isolationskunststoff aufgebaut wird. Diese in einer entsprechenden Form ausgeprägte grosse Menge an Isolationskunststoff dient als Stütz- bzw. Rückhalteelement für die um den Polschenkel gewickelte Spulenwicklung, um diese sicher am Polschenkel in Position zu halten. Im Gegensatz dazu ist die Kunststoffisolationsschicht an den restlichen Stellen des Polelements und insbesondere an der Innenseite des Statorpakets dünner als an den Enden des Statorzahns. Eine möglichst dünne Schicht an Isolationskunststoff ist vorteilhaft für eine gute Abfuhr an ungewollter Wärme aus dem Inneren des Statorpakets, welche durch die Wickelspulen entsteht. Hierbei kann es vorkommen, dass die Kunststoffisolationsschicht doppelt so dick ist wie an den restlichen Stellen des Statorpakets.

Zum eigentlichen Auftragen der Kunststoffisolationsschicht wird oftmals an einem Ende des Statorpakets der flüssige Isolationskunststoff in das Statorpaket gegossen. Dadurch, dass mehr Kunststoff an den Enden des Polzahns als z.B. an dem Fuss des Polelements aufgetragen werden muss und die grössere Menge an Isolationskunststoff langsamer fliesst als die kleinere Menge an Isolationskunststoff kann es dazu kommen, dass die beiden unterschiedlichen Mengen nicht zeitgleich am gegenüberliegenden Ende des Statorpakets ankommen. Hierdurch kann es geschehen, dass die kleinere Menge an Isolationskunststoff am Ende des Statorpakets bereits kühlt und erhärtet, bevor die grössere Menge an Isolationskunststoff ebenfalls an diesem Ende des Statorpakets angekommen ist. Durch die unterschiedlichen Temperaturen und die damit verbundenen unterschiedlichen Härtegrade der beiden Kunststoffmengen kann es an der Stelle, an der diese beiden ungleichen Mengen im Statorpaket schliesslich zusammentreffen zu ungewollten Bindenähten in der Kunststoffisolation kommen. Darüber hinaus verzögert die langsamere Geschwindigkeit der grösseren Kunststoffmenge generell den gesamten Beschichtungsprozess.

Des Weiteren stellt die grössere Menge an Kunststoffisolation, welche als Stütz- bzw. Rückhalteelement für die um den Polschenkel gewickelte Spulenwicklung dient, ein erhebliches Problem für die optimale Abfuhr an ungewollter Wärme, die durch die Spulenwicklung entsteht, aus dem Inneren des Statorpakets dar.

Aufgabe der vorliegenden Erfindung ist es, diese vorstehend beschriebenen Probleme zu lösen und insbesondere eine möglichst optimale Isolation an den Polelementen bzw. an der Innenseite des Statorpakets zu erreichen. Darüber hinaus besteht auch eine Aufgabe der vorliegenden Erfindung darin, den Anteil an Eisen (d.h. Eisen in Form des Elektroblechs) im Statorpaket so gering wie möglich zu halten. Mit anderen Worten soll erreicht werden, dass der Eisenanteil im Statorpaket nur gerade so groß ist wie für die Erzeugung des magnetischen Flusses im Statorpaket notwendig ist. Durch die Reduktion des Eisenanteils kann das Statorpaket insgesamt leichter und in Bezug auf die Materialkosten günstiger hergestellt werden.

Diese Aufgabe wird erfindungsgemäss durch den Gegenstand des unabhängigen Anspruchs 1 und 7 gelöst. Weitere Ausführungsformen des erfindungsgemässen Gegenstands finden sich in den abhängigen Unteransprüchen.

Durch den Gegenstand der vorliegenden Erfindung wird ein Statorpaket zur Verwendung in einer elektromagnetischen Maschine bereitgestellt, welches wenigstens eine erste Blechlamelle und eine zweite Blechlamelle mit jeweils einem Ringelement mit einem Mittelpunkt, einer Innenseite und einer Aussenseite sowie wenigstens ein Polelement, welches an der Innenseite des Ringelements positioniert ist und sich in radialer Ausrichtung zu dem Mittelpunkt des Ringelements erstreckt, wobei das Polelement einen Polzahn mit einem ersten Polzahnende, einem zweiten Polzahnende, einer Oberseite sowie einer ersten Unterseite und einer zweiten Unterseite aufweist, enthält.

Darüber hinaus ist ebenfalls Aufgabe der vorliegenden Erfindung eine Blechlamelle zur Verwendung in dem erfindungsgemässen Statorpaket bereitzustellen.

Erfindungsgemäss enthält der Polzahn wenigstens ein Fließbarriereelement.

Durch das Fließbarriereelement wird die Fliessgeschwindigkeit einer im flüssigen Zustand aufgetragenen Kunststoffisolation reduziert, wodurch eine optimale Kunststoffisolationsschicht erreicht wird. Die durch das Vorhandensein des Fließbarriereelements erzeugte optimale Kunststoffisolation zeichnet sich insbesondere durch eine gleichmässig dünne Wandstärke bei gleichzeitig hoher Durchschlagsfestigkeit aus. Darüber hinaus kann durch die gleichmässig dünne Wandstärke der Kunststoffisolation eine sehr gute Wärmeleitfähigkeit mit einem geringen Isolationswiderstand erreicht werden.

Das Fließbarriereelement ist in jeder Ausgestaltung elektromagnetisch nicht aktiv, so dass der magnetische Fluss am Polelement nicht negativ beeinflusst wird.

Gemäss einer vorteilhaften Ausgestaltungsform der vorliegenden Erfindung kann das Fließbarriereelement an dem ersten Polzahnende und/oder an dem zweiten Polzahnende angeordnet ist. Durch die Positionierung jeweils eines Fließbarriereelements an dem ersten und/oder zweiten Polzahnende wird die Fliessgeschwindigkeit des flüssigen Isolationsmaterials optimal reduziert und gleichzeitig ein geeignetes Stütz- bzw. Rückhalteelement für die um den Polschenkel gewickelte Spulenwicklung bereitgestellt. Das Fließbarriereelement kann dabei an der Unterseite des Polzahns und/oder an den Polzahnenden positioniert sein.

Durch die optionale Ausgestaltung des Fließbarriereelements in Form wenigstens einer ersten von dem Polzahn abstehenden Erhebung und/oder einer zweiten von dem Polzahn abstehenden Erhebung kann sichergestellt werden, dass die Geschwindigkeit des flüssigen Isolationsmaterials effektiv reduziert und die um den Polschenkel gewickelte Spulenwicklung zurückgehalten werden kann. Die Erhebung kann dabei in Form eines länglichen Stegs oder Rippe gestaltet sein. Alternativ kann die Erhebung auch jede andere geeignete Form aufweisen.

Entsprechend einer weiteren vorteilhaften Ausgestaltungsform kann vorgesehen sein, dass die erste Erhebung größer als die zweite Erhebung ist. Durch die unterschiedlich grosse Ausgestaltung der ersten und zweiten Erhebung kann eine möglichst optimale Anpassung des Fließbarriereelements an die äussere Kontur des Polzahns vorgenommen werden.

Um eine möglichst turbulente Strömung für das flüssige Isolationsmaterial zu erzeugen ist es gemäss einer zusätzlichen Ausgestaltungsform vorteilhaft, wenn sich das Fließbarriereelement einer ersten Blechlamelle an einer ersten Position an dem Polzahn befindet und das Fließbarriereelement einer zweiten Blechlamelle an einer zweiten Position an dem Polzahn befindet. Darüber hinaus ist auch möglich, dass die erste Position des Fließbarriereelements der ersten Blechlamelle an dem Polzahn versetzt zu der zweiten Position des Fließbarriereelements der zweiten Blechlamelle an dem Polzahn angelegt ist. Durch diese unterschiedliche Positionierung der Fließbarriereelemente auf den einzelnen Blechlamellen kann ein zerklüfteter und damit nicht durchgehender Fließkanal entstehen, durch den das flüssige Isolationsmaterial langsam hindurchfliesst. Wie bereits vorstehend beschrieben, besteht die Aufgabe der vorliegenden Erfindung unter anderem darin, den Anteil an Eisen (d.h. Eisen in Form des Elektroblechs) im Statorpaket so gering wie möglich zu halten, d.h. nur gerade so groß wie für die Erzeugung des magnetischen Flusses im Statorpaket notwendig ist. Mit Hilfe des Isolationsmaterials (in Form eines Kunststoffes), welches auf die Polelemente (d.h. Innenseite des Statorpakets) aufgetragen wird, können wiederum die notwendigen Luft- und Kriechstrecken für das Statorpaket eingehalten werden. Jedoch kann das Isolationsmaterial nicht absolut homogen auf die Polelemente (d.h. an die Innenseite des Statorpakets) aufgetragen werden, so dass eine inhomogene (heterogene) Wandstärke des Isolationsmaterials entsteht. Um den Effekten dieser inhomogenen (heterogenen) Wandstärke des Isolationsmaterials entgegenzuwirken, eignet sich die (vorstehend beschriebene) versetzte Anordnung der Fließbarriereelemente von einer Blechlamelle zur anderen, wodurch auf den einzelnen Blechlamellen ein zerklüfteter und damit nicht durchgehender Fließkanal entsteht.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigt:
- Fig. 1: eine perspektivische Ansicht eines erfindungsgemässen Statorpakets bestehend aus einer Vielzahl an einzelnen, hintereinander gereihten und miteinander verbundenen Blechlamellen gemäß einer ersten Ausführungsform;
- Fig. 2: eine Vorderansicht auf eine Blechlamelle mit Polelementen und Fließbarriereelementen gemäß der ersten Ausführungsform;
- Fig. 3: Detailansichten der Fließbarriereelemente gemäß der ersten Ausführungsform entsprechend den Ausschnitten in Fig. 2;
- Fig. 4: weitere Detailansichten der Fließbarriereelemente an den Unterseiten der Polzähne gemäß der ersten Ausführungsform;
- Fig. 5: eine perspektivische Ansicht eines erfindungsgemässen Statorpakets bestehend aus einer Vielzahl an einzelnen, hintereinander gereihten und miteinander verbundenen Blechlamellen gemäß einer zweiten Ausführungsform;
- Fig. 6: eine Vorderansicht auf ein Statorpaket bestehend aus Blechlamellen mit Polelementen und Fließbarriereelementen gemäß der zweiten Ausführungsform;
- Fig. 7: eine Schnittansicht entlang des Statorpakets gemäß der zweiten Ausführungsform;
- Fig. 8: eine Detailansicht der Fließbarriereelemente an den Unterseiten der Polzähne gemäß der zweiten Ausführungsform;
- Fig. 9: eine perspektivische Ansicht auf das Statorpaket mit einer Isolationsschicht an der Innenseite des Statorpakets;
- Fig. 10: eine Vorderansicht auf das Statorpaket mit einer Isolationsschicht an der Innenseite des Statorpakets;
- Fig. 11: eine perspektivische Ansicht auf das Statorpaket mit einer einzelnen Isolationsschicht an der Innenseite des Statorpakets; und
- Fig. 12: eine perspektivische Ansicht auf ein einzelnes Segment der Isolationssicht.

### Ausführungsbeispiel:

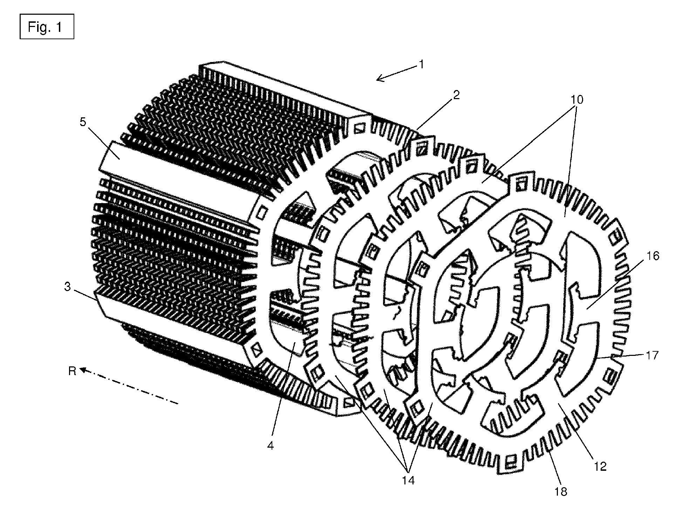

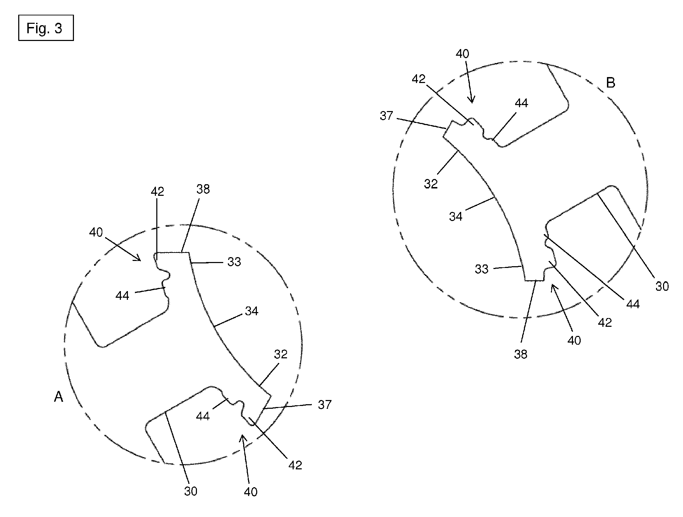

Fig. 1 bis 4 zeigen ein erfindungsgemässes Statorpaket 1 gemäss einer ersten Ausführungsform. Hierbei zeigt Fig. 1 insbesondere eine perspektivische Ansicht auf ein erfindungsgemässes Statorpaket 1 gemäss einer ersten Ausführungsform. Das Statorpaket 1 enthält eine Anzahl von aneinander gereihten Blechlamellen 10.

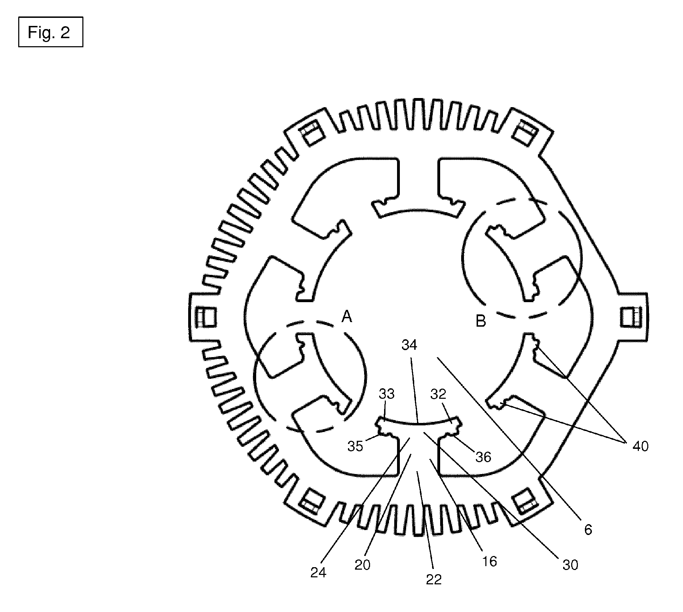

Wie in Fig. 1 und Fig. 2 dargestellt, enthält jede Blechlamelle 10 wiederum eine Vorderseite 12, eine (nicht gezeigte) Rückseite, ein kreisförmiges Ringelement 14 mit einem Mittelpunkt, Polelemente 16, eine Innenseite 17 und eine Aussenseite 18.

Zur Bildung eines Statorpakets 1 werden die einzelnen Blechelemente 10 hintereinander gereiht und miteinander verbunden. Das Statorpaket 1 weist damit eine zylindrische Form mit einem ersten Statorende 2, einem zweiten Statorende 3, einer Innenseite 4, einer Aussenseite 5 und einer zentrischen Öffnung 6 auf. In diese zentrische Öffnung 6 kann ein (nicht gezeigter) Rotor eingefügt und drehbar gelagert werden.

An der Innenseite 12 des Ringelements 14 sind die einzelnen Polelemente 16 positioniert. Jedes Polelement 16 enthält einen rechteckigen Polschenkel 20 mit einem ersten Polschenkelende 22 und einem zweiten Polschenkelende 24. Das erste Polschenkelende 22 ist fest mit der Innenseite 12 des Ringelements 14 verbunden und dient unter anderem dazu, eine nicht gezeigte Spulenwicklung, die aus einem Spulendraht besteht, aufzunehmen. An dem zweiten Polschenkelende 24 befindet sich ein Polzahn 30. Der Polzahn 30 weist eine leicht gebogene Sichelform auf und enthält ein erstes Polzahnende 32, ein zweites Polzahnende 33, eine durchgehende Oberseite 34, eine erste Unterseite 35 sowie eine zweite Unterseite 36. Das erste Polzahnende 32 und das zweite Polzahnende 33 liegen sich gegenüber und bilden eine erste seitliche Aussenfläche 37 und eine zweite seitliche Aussenfläche 38 an dem Polzahn 30.

Der Polschenkel 20 erstreckt sich mit dem zweiten Polschenkelende 24 und dem Polzahn 30 in radialer Ausrichtung zu dem Mittelpunkt des kreisförmigen Ringelements 14.

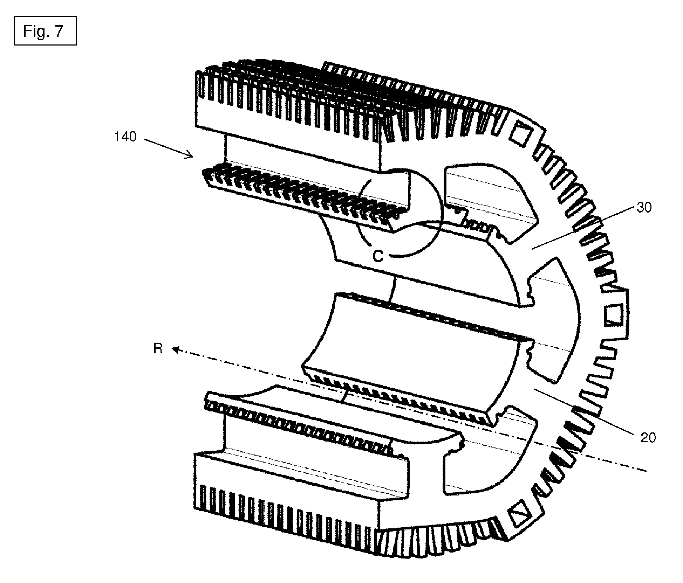

Gemäß einer alternativen (nicht gezeigten) Ausgestaltungsform kann das Statorpaket 1 auch eine Anzahl an Statorpaket-Segmenten enthalten. Hierbei enthält jedes der Statorpaket-Segmente wenigstens ein Polelement (vgl. Fig. 7). Die Statorpaket-Segmente werden mit Hilfe von (nicht dargestellten) Verbindungselementen so miteinander verbunden, dass die zylindrische Form des Statorpakets entsteht. Bei den Verbindungselementen kann es sich um Steck-, Schiebe-, Klick- oder Klebeverbindungen handeln.

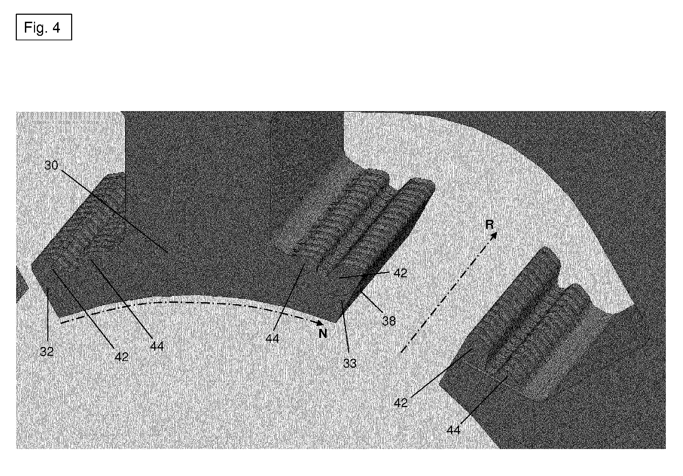

Wie ebenfalls in Fig. 1 bis 4 dargestellt, ist gemäss der ersten Ausgestaltungsform des erfindungsgemässen Statorpakets 1 an der ersten Unterseite 35 und an der zweiten Unterseite 36 eines jeden Polzahns 30 ein Fließbarriereelement 40 positioniert. Das Fließbarriereelement 40 ist dabei jeweils im Wesentlichen in Form einer ersten abgerundeten Erhebung 42 und einer zweiten abgerundeten Erhebung 44 ausgestaltet. Die erste Erhebung 42 und die zweite Erhebung 44 erstrecken sich jeweils in Richtung Innenseite 17 des kreisförmigen Ringelements 14. Die erste Erhebung 42 ist etwas kleiner gestaltet als die zweite Erhebung 44. Darüber hinaus befindet sich die erste Erhebung 42 näher an dem Polschenkel 20 als die zweite Erhebung 44. Zwischen der ersten Erhebung 42 und der zweiten Erhebung 44 ist eine abgerundete Aussparung 46 in Form einer Vertiefung vorgesehen. Durch die erste und zweite Erhebung 42, 44 und die abgerundete Aussparung 46 ergibt sich an der ersten Unterseite 35 sowie an der zweiten Unterseite 36 des Polzahns 30 in Längserstreckung des Statorpakets 1 in Richtung R ein durchgehender Kanal 48 und in Umfangsrichtung N eine wellenförmige Oberfläche 49, vgl. Fig. 4.

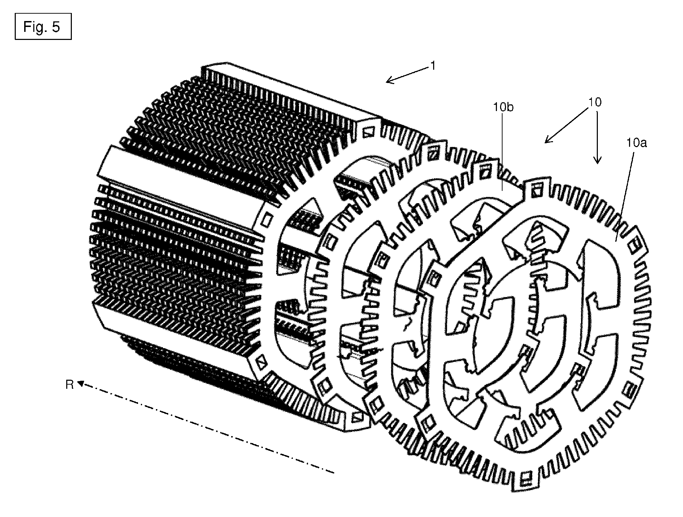

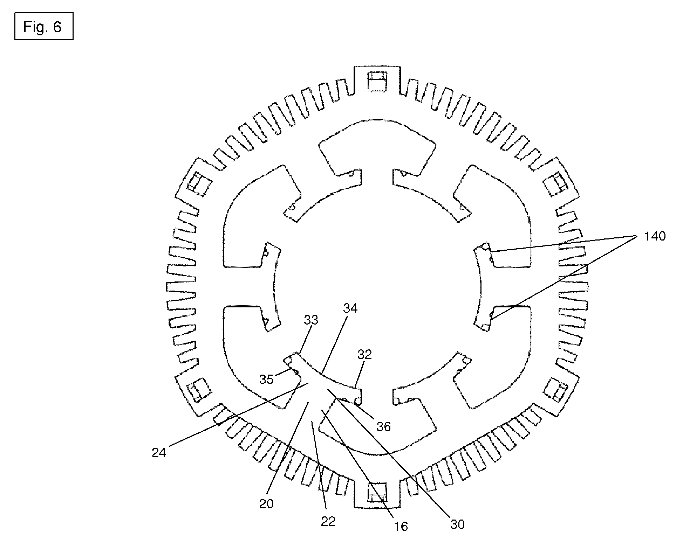

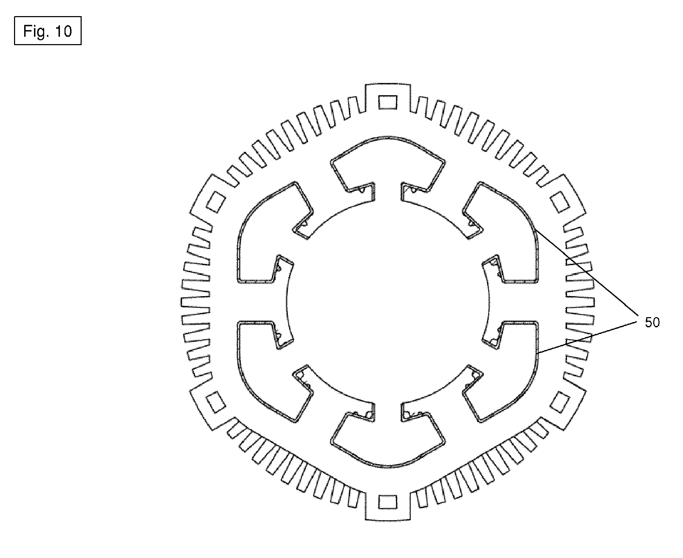

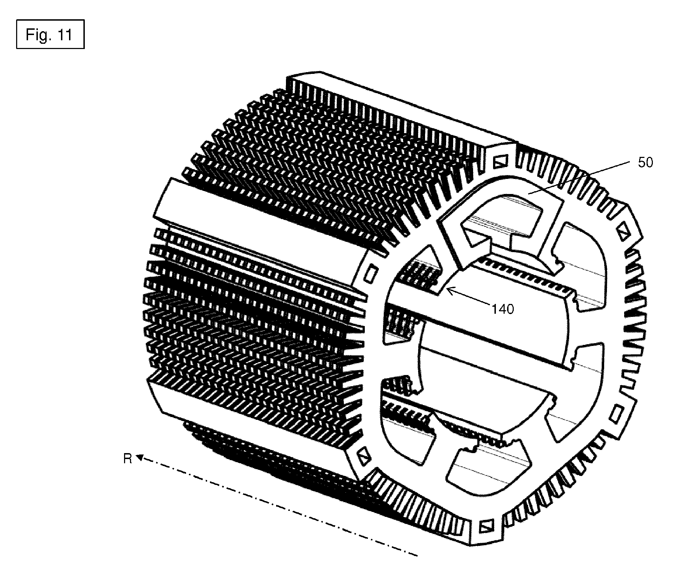

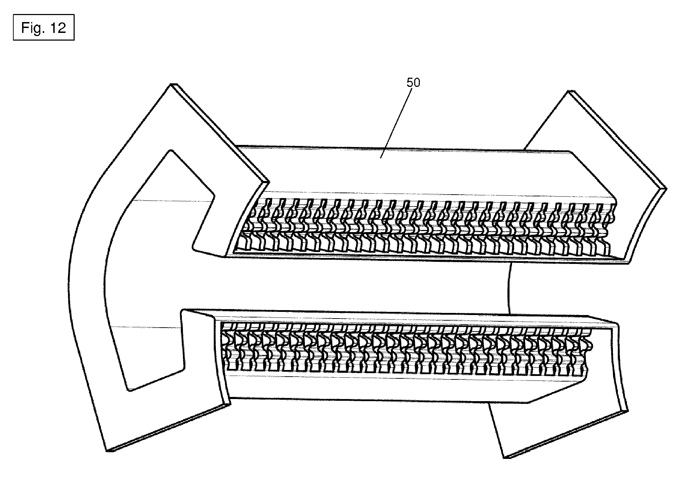

Fig. 5 bis 12 zeigen ein erfindungsgemässes Statorpaket 1 gemäss einer zweiten Ausführungsform.

Hierbei zeigt Fig. 5 insbesondere eine perspektivische Ansicht auf ein erfindungsgemässes Statorpaket 1 gemäss einer zweiten Ausführungsform. Wie in Fig. 7 dargestellt, enthält das Statorpaket 1 eine Anzahl von aneinander gereihten Blechlamellen 10. Die Blechlamellen 10 weisen dabei unterschiedliche Stärken auf, d.h. das Statorpaket 1 besteht jeweils abwechselnd aus einer ersten dicken Blechlamelle 10a sowie einer zweiten dünnen Blechlamelle 10b. Darüber hinaus entspricht die Ausgestaltung der Blechlamelle 10 gemäss der zweiten Ausführungsform im Wesentlichen der Ausgestaltung der Blechlamelle 10 gemäss der ersten Ausführungsform.

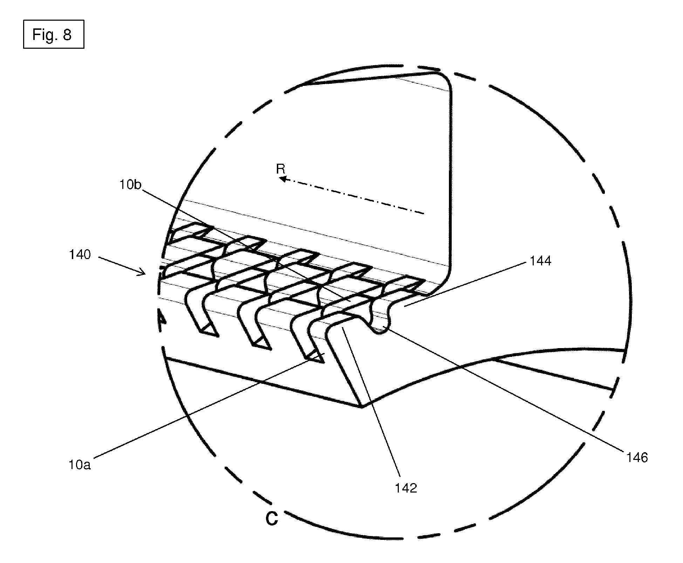

Wie in Fig. 8 dargestellt, ist gemäss der zweiten Ausführungsform des erfindungsgemässen Statorpakets 1 ebenfalls an der ersten Unterseite 35 und an der zweiten Unterseite 36 eines jeden Polzahns 30 ein Fließbarriereelement 140 positioniert.

Das Fließbarriereelement 140 gemäss der zweiten Ausführungsform ist dabei im Wesentlichen in Form einer ersten rechteckigen Erhebung 142 mit abgerundeten Ecken und einer zweiten rechteckigen Erhebung 144 mit abgerundeten Ecken an den Unterseiten 35, 35 des Polzahns 30 ausgestaltet. Die erste Erhebung 142 und die zweite Erhebung 144 erstrecken sich jeweils in Richtung Innenseite 17 des kreisförmigen Ringelements 14.

Im Gegensatz zu der ersten Ausführungsform weisen bei der zweiten Ausführungsform die erste Erhebung 142 und die zweite Erhebung 144 die gleiche Höhe von den Unterseiten 35, 36 eines jeden Polzahns 30 auf. Zwischen der ersten Erhebung 142 und der zweiten Erhebung 144 ist eine abgerundete Aussparung 146 in Form einer Vertiefung vorgesehen. Die Position der ersten Erhebung 142 und die Position der zweiten Erhebung 144 sind jedoch nicht identisch an den Unterseiten 35, 36 der Polzähne 30 der einzelnen Blechlamellen 10, sondern versetzt zueinander angelegt. Das heisst, dass sich die erste Erhebung 142 eines Fließbarriereelements 140 an einer ersten dicken Blechlamelle 10a an einer anderen Position befindet als die erste Erhebung 142 eines Fließbarriereelements 140 an einer zweiten dünnen Blechlamelle 10b, vgl. Fig. 7 und 8.

Des Weiteren befindet sich die zweite Erhebung 144 eines Fließbarriereelements 140 an der ersten dicken Blechlamelle 10a an einer anderen Position als die erste Erhebung 142 eines Fließbarriereelements 140 an der zweiten dünnen Blechlamelle 10b. Hierdurch befindet sich die erste Erhebung 142 eines Fließbarriereelements 140 an der ersten dicken Blechlamelle 10a in Richtung R zwischen der ersten Erhebung 142 und der zweiten Erhebung 144 eines Fließbarriereelements 140 an der zweiten dünnen Blechlamelle 10b.

Durch diese versetzte Positionierung der ersten Erhebung 142 und zweiten Erhebung 144 an den jeweiligen Polzähnen 30 der einzelnen Blechlamellen 10a, 10b ergeben sich (anders als bei der ersten Ausführungsform) keine durchgehenden Kanäle bzw. Passagen, sondern einzelne, versetzt zueinander angeordnete Vertiefungen 146 entlang den Unterseiten 35, 36 der Polzähne 30 in Richtung R.

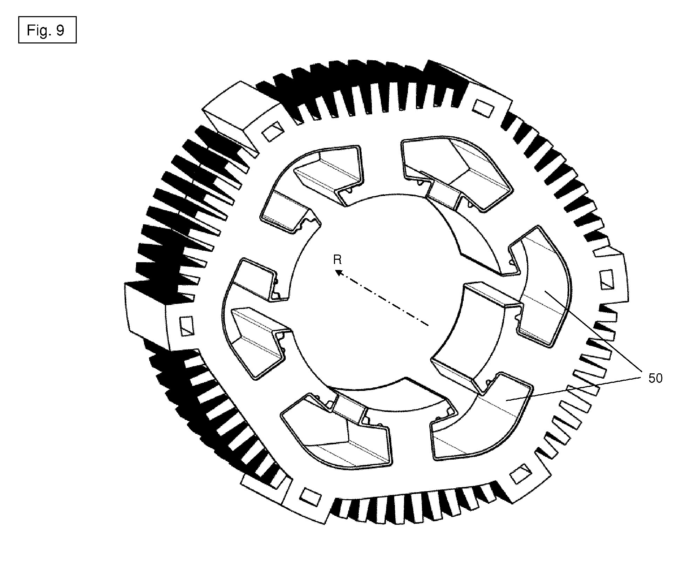

Zum Anbringen einer Isolationsschicht 50 an der Innenseite 4 des Statorpakets 1, wie sie in Fig. 9 bis 11 gezeigt ist, läuft das flüssige Kunststoffisolationsmaterial von dem Statorende 2 in Richtung R zum Statorende 3. Ziel beim Auftragen dieses flüssigen Isolationskunststoffs ist eine gleichmässige, d.h. ohne Bindenähte, und an allen Stellen der Innenseite 4 des Statorpakets 1 gleichstarke Isolationsschicht 50. Das heisst, dass diese Isolationsschicht 50 weder zu dick noch zu dünn sein sollte. Eine zu dicke Isolationsschicht 50 führt dabei zu einer verschlechterten Abfuhr der Wärme an die Aussenseite 5 des Statorpakets 1, welche durch die (nicht dargestellte) Spulenwicklung im Inneren des Statorpakets 1 entsteht. Eine zu dünne Isolationsschicht 50 bietet dagegen keine ausreichende Schlagfestigkeit gegen ein mechanisches Einwirken.

Wie insbesondere in Fig. 4 gezeigt und vorstehend beschrieben, lassen die Fließbarriereelemente 40 gemäss der ersten Ausführungsform lediglich kleine Durchgänge bzw. Kanäle 48 an den Polzähnen 30 entstehen, durch die das flüssige Isolationsmaterial vom ersten Statorende 2 zum zweiten Statorende 3 hindurchfliessen muss. Durch diese kleinen Kanäle 48 ist die Fließgeschwindigkeit des flüssigen Isolationsmaterials reduziert, so dass das Isolationsmaterial an der Innenseite 4 des Statorpakets 1 (ungefähr) dieselbe Fließgeschwindigkeit hat wie das Isolationsmaterial an den Unterseiten 35, 35 der Polzähne 30. Hierdurch kann erreicht werden, dass die Ströme von Isolationsmaterial an der Innenseite 4 des Statorpakets 1 und an den Polzähnen 30 (ungefähr) gleichschnell fliessen und damit (ungefähr) gleichzeitig am zweiten Statorende 3 ankommen. Durch das (ungefähr) gleichzeitige Aufeinandertreffen des ersten Isolationsmaterialstroms an der Innenseite 4 des Statorpakets 1 und des zweiten Isolationsmaterialstroms an den Polzähnen 30 ist die Temperatur dieser beiden Ströme (ungefähr) gleich, wodurch ungewollte Bindenähte an der Stelle des Zusammentreffens der beiden Ströme vermieden werden können und eine durchgehend gleichmässige bzw. glatte Isolationsschicht an Innenseite 4 des Statorpakets 1 erreicht werden kann.

Im Gegensatz zu der ersten Ausführungsform sind in der zweiten Ausführungsform durch die versetzt angeordneten Fließbarriereelemente 140 keine kleinen Durchgänge bzw. Kanäle an den Unterseiten 35, 36 der Polzähne 30, sondern (wie bereits vorstehend beschrieben) versetzt zueinander angeordnete Vertiefungen 146 entlang den Unterseiten 35, 36 der Polzähne 30 in Richtung R entstanden. Beim Auftragen einer Isolationsschicht 50 an der Innenseite 4 des Statorpakets 1 fliesst das flüssige Isolationsmaterial vom ersten Statorende 2 zum zweiten Statorende 3. Mit Hilfe der versetzt angeordneten Vertiefungen 146 wird effektiv die Fließgeschwindigkeit des flüssigen Isolationsmaterials entlang den Unterseiten 35, 36 der Polzähne 30 reduziert, da das flüssige Isolationsmaterial nicht an einer glatten Oberfläche entlang fliessen kann, sondern sich abwechselnd über die einzelnen Erhebungen 142, 144 und Vertiefungen 146 der Fließbarriereelemente bewegen muss. Hierdurch kann ebenfalls erreicht werden, dass die Ströme von Isolationsmaterial an der Innenseite 4 des Statorpakets 1 und an den Polzahnenden 30 (ungefähr) gleichschnell fliessen und damit (ungefähr) gleichzeitig am zweiten Statorende 3 ankommen. Durch das (ungefähr) gleichzeitige Aufeinandertreffen des ersten Isolationsmaterialstroms an der Innenseite 4 des Statorpakets 1 und des zweiten Isolationsmaterialstroms an den Polzähnen 30 ist die Temperatur dieser beiden Ströme (ungefähr) gleich, wodurch ungewollte Bindenähte an der Stelle des Zusammentreffens der beiden Ströme vermieden werden können und eine durchgehend gleichmässige bzw. glatte Isolationsschicht 50 an der Innenseite 4 des Statorpakets 1 erreicht werden kann.

Darüber hinaus kann durch die Fließbarriereelemente 40, 140 die Isolationsschicht 50 in einer optimalen Stärke (d.h. weder zu dünn noch zu dick) auch an den Polzähnen 30 aufgetragen werden, ohne dabei auf ein Stütz- bzw. Rückhalteelement für die um den Polschenkel 20 gewickelte Spulenwicklung zu verzichten oder eine Zunahme der magnetischen Flussdichte, welche eine magnetische Sättigung an dem Polelement 16 zur Folge haben kann, zu erzeugen. Eine optimal starke bzw. dicke Isolationsschicht 50 legt sich bei deren Auftragen auf die einzelnen als Erhebungen ausgestalteten Fließbarriereelemente 40, 140 und fliesst (langsam) zwischen die einzelnen Fließbarriereelemente 40, 140. Dadurch, dass die Abstände zwischen den einzelnen Fließbarriereelementen 40, 140 nur maximal der doppelten Wandstärke der aufzutragenden Isolationsschicht 50 entspricht, kann sichergestellt werden, dass die Isolationsschicht 50 auch zwischen den einzelnen Fließbarriereelementen 40, 140 und insgesamt an den Polzahnenden 32, 33 mit einer optimalen Wandstärke, d.h. weder zu dünn noch zu dick, aufgetragen wird.

## Patentansprüche

1. Statorpaket zur Verwendung in einer elektromagnetische Maschine, enthaltend wenigstens eine erste Blechlamelle und eine zweite Blechlamelle mit jeweils
- einem Ringelement mit einem Mittelpunkt, einer Innenseite und einer Aussenseite; sowie
- wenigstens ein Polelement, welches an der Innenseite des Ringelements positioniert ist und sich in radialer Ausrichtung zu dem Mittelpunkt des Ringelements erstreckt, wobei das Polelement einen Polzahn mit einem ersten Polzahnende, einem zweiten Polzahnende, einer Oberseite sowie einer ersten Unterseite und einer zweiten Unterseite aufweist
**dadurch gekennzeichnet, dass** der Polzahn wenigstens ein Fließbarriereelement enthält.

2. Statorpaket nach Anspruch 1,
**dadurch gekennzeichnet, dass** das Fließbarriereelement an dem ersten Polzahnende und/oder an dem zweiten Polzahnende angeordnet ist.

3. Statorpaket nach Anspruch 1 oder 2,
**dadurch gekennzeichnet, dass** das Fließbarriereelement in Form wenigstens einer ersten von dem Polzahn abstehenden Erhebung und einer zweiten von dem Polzahn abstehenden Erhebung ausgestaltet ist.

4. Statorpaket nach Anspruch 3,
**dadurch gekennzeichnet, dass** die erste Erhebung größer ist als die zweite Erhebung.

5. Statorpaket nach wenigstens einem der Ansprüche 1 bis 4,
**dadurch gekennzeichnet, dass** sich das Fließbarriereelement einer ersten Blechlamelle an einer ersten Position an dem Polzahn befindet und das Fließbarriereelement einer zweiten Blechlamelle an einer zweiten Position an dem Polzahn befindet.

6. Statorpaket nach Anspruch 5,
**dadurch gekennzeichnet, dass** die erste Position des Fließbarriereelements der ersten Blechlamelle an dem Polzahn versetzt zu der zweiten Position des Fließbarriereelements der zweiten Blechlamelle an dem Polzahn angelegt ist.

7. Blechlamelle zur Verwendung in einem Statorpaket gemäss wenigstens einem der Ansprüche 1 bis 6.
